# EUROPEAN PATENT APPLICATION

(11) **EP 2 186 623 A1**
(43) Date of publication of application: **19.05.2010**
(21) Application number: 08829524.1
(22) Date of filing: 27.08.2008
(51) Int. Cl.: B29C 65/78, G02B 6/12, G02B 6/13

(54) **ORGANIC DEVICE AND METHOD FOR MANUFACTURING ORGANIC DEVICE**

(30) Priority: 06.09.2007 JP 2007231990
(71) Applicant: Omron Corporation, Kyoto-shi, Kyoto 600-8530 (JP)
(72) Inventor: YOSHITAKE, Naoki, Kyoto-shi, Kyoto 600-8530 (JP); TATARA, Yoshitaka, Kyoto-shi, Kyoto 600-8530 (JP); YASUDA, Naru, Kyoto-shi, Kyoto 600-8530 (JP); HOSOKAWA, Hayami, Kyoto-shi, Kyoto 600-8530 (JP)
(74) Representative: Giovannini, Francesca
(86) International application number: PCT/JP2008/065323
(87) International publication number: WO 2009/031446

(57) **Abstract**

In an aim of realizing an organic device in which the adhesiveness between the substrate and the polymer layer can be enhanced, an organic device of the present invention includes a substrate (1) made of polymer and has a polymer layer (2) adhered on the substrate (1). In the organic device of the present invention, a crystallization degree of an adhesive surface (1a) with the polymer layer (2) in the substrate (1) is smaller than a crystallization degree of an interior of the substrate (1), and thus the adhesiveness between the substrate (1) and the polymer layer (2) can be enhanced.

## Description

### TECHNICAL FIELD

The present invention relates to an organic device and a method of manufacturing the organic device.

### BACKGROUND ART

In recent years, optical communication network enabling large capacity data communication at high speed is expanding. The optical communication network is assumed to be mounted on a consumer device in the future. An electrical input/output optical data transmission cable (optical cable) capable of being used no different from the present electrical cable is desired for the application of large capacity data transfer at higher speed, noise countermeasures, and data transmission between substrates in the device. In view of flexibility, a light guide is desirably used for the optical cable.

The light guide is formed by a core having a large index of refraction and a clad having a small index of refraction arranged in contact with the periphery of the core, and propagates the light signal entered to the core while repeating total-reflection at the boundary of the core and the clad. The light guide has flexibility since the core and the clad are made of flexible polymeric material.

In recent years, in particular, a flexible (similar to electrical wiring) optical wiring mounted on bendable displays and smaller and thinner consumer devices is desirably realized with the light guide. That is, the light guide is desirably a film-form light guide.

The number and the importance of the organic device using polymer including the light guide are increasing year after year. The organic device includes an optical memory, a liquid crystal device, and the like. Such organic devices are often formed on a substrate generally made of polymer.

In recent years, flexibility is demanded on the organic device such as the light guide, electronic paper, or flexible solar battery. In the organic device demanded with flexibility, the adhesiveness between the substrate and the polymer layer greatly influences a performance of the organic device.

In particular, the light guide having flexibility is expected to be used in a narrow wiring of the electronic device such as the portable telephone. Thus, the light guide is placed in an ultra-bent state or an ultra-twisted state depending on the usage state of the electronic device. An unexpected stress thus concentrates between the light guide and the substrate, and the optical characteristics of the light guide are greatly influenced by stripping, and the like. Enhancement in the adhesiveness between the substrate and the polymer layer (light guide) is thus an urgent need in the light guide serving as the organic device.

In a general organic device, the adhesiveness between the substrate and the polymer layer is sufficiently ensured by applying primer on the substrate surface in the technique described in patent document 1.

The technique described in patent document 1 is effective as a means for enhancing the adhesiveness between the substrate and the polymer layer in a general organic device. However, the adhesiveness between the substrate and the light guide may not be sufficiently ensured in the light guide placed under adverse conditions such as ultra-bent state or ultra-twisted state. Thus, if the light guide serving as the organic device is manufactured using the technique described in patent document 1, the optical characteristics of the light guide may degrade as the light guide strips from the substrate.

The influence of the optical characteristics caused by the stripping of the light guide from the substrate will be described below.

In the optical module for light transmitting information with the light guide as a medium, optical axis alignment of the light guide and the light emitting element (or light receiving element) is required on the light incident side end (or light exit side end) of the light guide. High accuracy is demanded on the positional relationship of the light emitting element (or light receiving element) and the light guide to efficiently transmit information. The optical axis alignment also influences the coupling loss. The variation in the coupling loss leads to degradation of the S/N ratio.

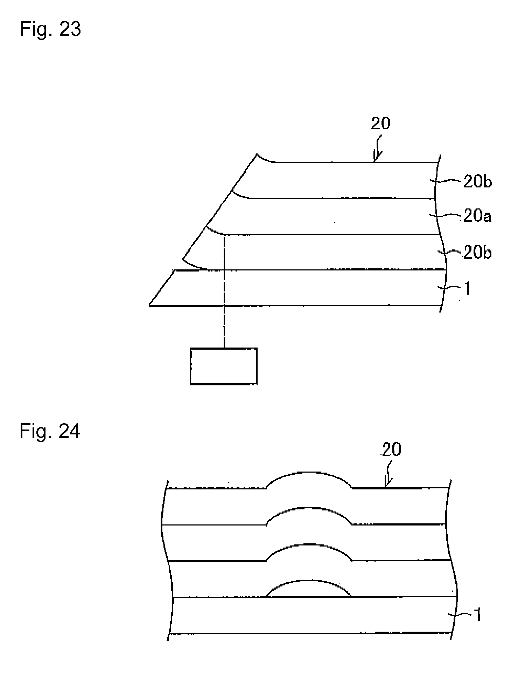

As shown in Fig. 23, the optical axes shift and the coupling loss increases when the light guide 20 strips from the substrate 1. As a result, the transmission characteristics of the light guide are greatly influenced.

The light guide generally has a configuration of being weak to local bending. As shown in Fig. 24, the local bending of the light guide 20 occurs when the light guide 20 strips from the substrate 1. This local bending increases the reflection angle of the propagation light in the light guide 20, and the propagation light leaks to the outside of the light guide. Thus, the loss by the local bending increases, the coupling loss varies, and the S/N ratio degrades.
Patent document 1: Japanese Unexamined Patent Publication "Japanese Unexamined Patent Publication No. 2005-62424 (published March 10, 2005)".

### DISCLOSURE OF THE INVENTION

The present invention has been devised to solve the problems described above, and an object thereof is to provide an organic device in which a polymer layer is formed on a substrate made of polymer, where the adhesiveness between the substrate and the polymer layer can be enhanced, and a method of manufacturing the organic device.

The inventors of the present application found that characteristics strong to pulling can be ensured while ensuring the adhesiveness of the substrate and the polymer layer even when placed under an adverse condition of ultra-bent state or ultra-twisted state by causing the adhesive surface of the substrate with the polymer layer to have a crystallization degree lower than the interior, and contrived the invention of the present application.

In order to solve the above problems, the present invention provides an organic device including a substrate made of polymer and including a polymer layer adhered on the substrate, wherein a crystallization degree of an adhesive surface with the polymer layer in the substrate is smaller than a crystallization degree of an interior of the substrate.

Here, "crystallization degree" refers to the proportion of the crystallized site in a specific region in the adhesive surface. In other words, the crystallized site and the non-crystallized site coexist in the adhesive surface, and the crystallization degree is the proportion of the crystallized site with respect to the total of the crystallized site and the non-crystallized site.

According to the above configuration, the crystallization degree of the adhesive surface with the polymer layer in the substrate is smaller than the crystallization degree of the interior of the substrate, and thus satisfactory adhesiveness between the substrate and the polymer layer is obtained. Thus, according to the above configuration, the adhesiveness of the substrate and the polymer layer can be ensured even when placed under an adverse condition of ultra-bent state or ultra-twisted state.

Furthermore, in the above configuration, the crystallization degree differs for the adhesive surface with the polymer layer in the substrate and the interior of the substrate, and thus the crystallization degree of the interior of the substrate is maintained large. A structure that is strong to pulling and the like can be achieved by the above configuration. Therefore, according to the above configuration, a pulling resistance property can be enhanced in a structure in which the crystallization degree of the adhesive surface is low to enhance the adhesiveness, compared to a structure in which the crystallization degree is the same for the adhesive surface with the polymer layer in the substrate and the interior of the substrate, or the crystallization degree is higher in the adhesive surface than the interior of the substrate

Other objects, characteristics, and advantages of the present invention should become apparent from the following description.

### BRIEF DESCRIPTION OF THE DRAWINGS

Fig. 1 is a cross-sectional view showing a schematic configuration of an organic device according to one embodiment of the present invention.
Fig. 2 is a conceptual view for describing a low crystallization process in the present invention.
Figs. 3(a) and 3(b) are explanatory views for describing the method of low crystallization process of the substrate in the organic device of Fig. 1.
Fig. 4 is a cross-sectional view showing another configuration of the organic device of the present invention.
Figs. 5(a) to 5(d) are explanatory views for describing the method of low crystallization process of the substrate in the organic device of Fig. 4.
Fig. 6 is a cross-sectional view showing a variant of the organic device of the present invention.
Fig. 7 is a cross-sectional view showing a variant of the organic device of the present invention.
Fig. 8 is a cross-sectional view showing a variant of the organic device of the present invention.
Fig. 9 is a cross-sectional view showing a variant of the organic device of the present invention.
Figs. 10(a) and 10(b) show a schematic configuration of the present organic device including a light guide serving as a polymer layer, where Fig. 10(a) is a cross-sectional view taken at a plane perpendicular to the light transmitting direction, and Fig. 10(b) is a cross-sectional view taken at a plane parallel to the light transmitting direction.
Figs. 11(a) to 11(f) are cross-sectional views showing a fabricating method (duplicating method) of the light guide using a die.
Figs. 12(a) to 12(e) are cross-sectional views showing a fabricating method of the light guide using the dry etching method.
Fig. 13 is a view showing a schematic configuration of the optical module including the light guide.
Fig. 14 is a view schematically showing the state of light transmission in the light guide.
Fig. 15(a) is a perspective view showing an outer appearance of a foldable portable telephone including the light guide according to the present embodiment, 15(b) is a block diagram of a portion where the light guide is applied in the foldable portable telephone shown in 15(a), and 15(c) is a perspective plan view of a hinge portion in the foldable portable telephone shown in 15(a).
Fig. 16(a) is a perspective view showing an outer appearance of a printing device including the light guide according to the present embodiment, 16(b) is a block diagram showing main parts of the printing device shown in 16(a), and 16(c) and 16(d) are perspective views showing a curved state of the light guide when the printer head is moved (driven) in the printing device.
Fig. 17 is a perspective view showing an outer appearance of a hard disc recording and reproducing device including the light guide according to the present embodiment.
Figs. 18(a) and 18(b) are cross-sectional views showing a schematic configuration of the organic device applied as an organic light emitting element.
Fig. 19 is a cross-sectional view showing a schematic configuration of the present organic device applied as a liquid crystal panel cell.
Fig. 20 is a cross-sectional view showing a schematic configuration of the present organic device applied as an organic solar battery.
Fig. 21 is a cross-sectional view showing a schematic configuration of the present organic device applied as a micro-lens serving as the polymer layer.
Fig. 22 is a cross-sectional view showing a schematic configuration of the present organic device applied as a print wiring substrate.
Fig. 23 is an explanatory view describing the influence of optical characteristics caused by the stripping of the light guide from the substrate.
Fig. 24 is an explanatory view describing the influence of optical characteristics caused by the stripping of the light guide from the substrate.

### Description of symbols

- 1: substrate
- 1a: adhesive surface
- 2: polymer layer
- 20: light guide

### BEST MODE FOR CARRYING OUT THE INVENTION

One embodiment of the present invention will be described below.

The inventors of the present application found that the adhesiveness of the substrate and the polymer layer can be ensured even when placed under an adverse condition of ultra-bent state or ultra-twisted state by causing the adhesive surface of the substrate with the polymer layer to have a crystallization degree lower than the interior, and contrived the invention of the present application. In other words, the organic device of the present invention is an organic device including a substrate made of polymer and in which a polymer layer is adhered to the substrate, where the crystallization degree of the adhesive surface of the substrate with the polymer layer is smaller than the crystallization degree of the interior of the substrate.

The result of reviewing the relationship between the adhesiveness of the substrate with the polymer layer and the crystallization degree of the substrate is shown in table 1. In this review, the crystallization degree of the substrate is measured using an X-ray diffraction apparatus. The review is made using PI (polyimide), PET (polyethylene terephtalate), and PP (polypropylene) for the material of the substrate.

The adhesive force of the substrate and the polymer layer is measured by a 90° stripping test. The difference in the crystallization degree in table 1 shows how much % the crystallization degree of the adhesive surface of the substrate reduced through the low crystallization process of causing the adhesive surface of the substrate with the polymer layer to have the crystallization degree lower than the interior (difference between crystallization degree of before low crystallization process and crystallization degree of after low crystallization process). An adhesive force enhancement percentage in table 1 shows how much % the adhesive force enhanced by the low crystallization process of the substrate, with the adhesive force of the substrate and the polymer layer measured when the low crystallization process is not performed defined as 100%.

**[Table 1]**

| | Difference in crystallization degree | Adhesive force enhancement percentage |
|---|---|---|
| PI | 2% | 23% |
| PET | 2% | 62% |
| PP | 2% | 70% |

As apparent from table 1, the adhesive force with the polymer layer is enhanced in the substrate where the adhesive surface with the polymer layer is made lower than the interior by 2% (difference crystallization degree of before low crystallization process and crystallization degree of after low crystallization process) through the low crystallization process. In particular, if the material of the substrate is PET (polyethylene terephtalate) or PP (polypropylene), the adhesive force with the polymer layer is enhanced by about 60%.

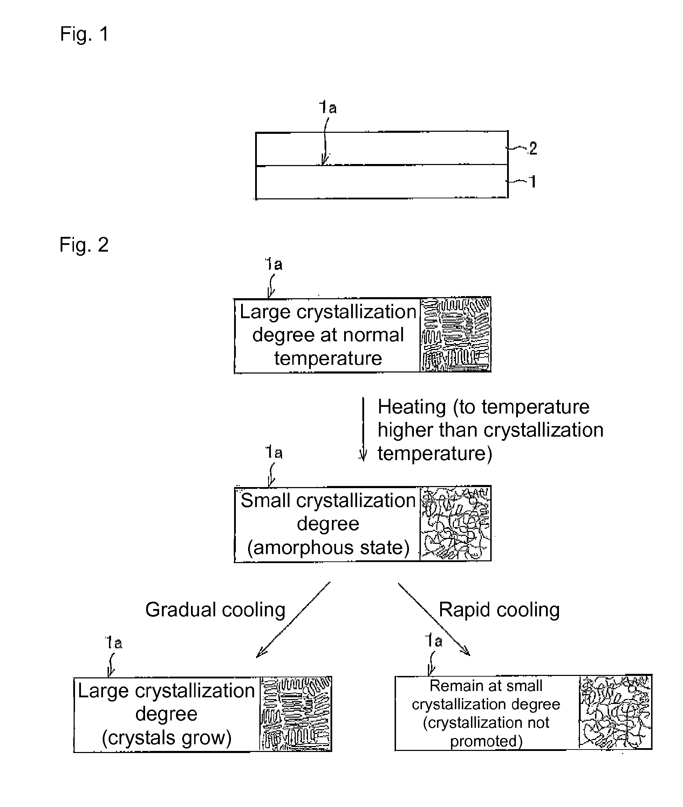

Fig. 1 is a cross-sectional view showing a schematic configuration of an organic device of the present embodiment (hereinafter referred to as present organic device). As shown in figure, the present organic device includes a substrate 1 made of polymer, and a polymer layer 2. The polymer layer 2 is adhered on the substrate 1. In the present organic device, the low crystallization process of lowering the crystallization degree is performed on an adhesive surface 1a of the substrate 1 with the polymer layer 2. The "crystallization degree" herein refers to the proportion of the crystallized site in a specific region of the adhesive surface 1a. In other words, the crystallized site and the non-crystallized site coexist in the adhesive surface 1a, and the crystallization degree is the proportion of the crystallized site with respect to the total of the crystallized site and the non-crystallized site.

The low crystallization process of lowering the crystallization degree refers to the process performed on the substrate surface having a relatively high crystallization degree to have the crystallization degree lower than the original crystallization degree. That is, the adhesive surface 1a of the substrate 1 has lower crystallization degree than the crystallization degree of before being subjected to the low crystallization process (i.e., crystallization degree of interior of substrate 1). Therefore, the crystallization degree of the adhesive surface 1a of the substrate 1 becomes smaller than the crystallization degree of the interior of the substrate 1 by performing the low crystallization process.

Therefore, in the present organic device, the adhesiveness of the substrate 1 and the polymer layer 2 is satisfactory since the low crystallization process is performed on the adhesive surface 1a of the substrate 1. Thus, according to the present organic device, the adhesiveness between the substrate 1 and the polymer layer 2 can be ensured even when placed under an adverse condition of ultra-bent state or ultra-twisted state.

Furthermore, in the present organic device, the primer processing is preferably performed on the adhesive surface 1a of the substrate 1 with the polymer layer 2. The adhesiveness between the substrate 1 and the polymer layer 2 further is enhanced by performing the low crystallization process and also performing the primer processing on the contacting surface 1a, and an organic device having higher reliability can be realized.

The method of manufacturing the present organic device has characteristics in including a low crystallization step of performing the low crystallization process of lowering the crystallization degree to lower than the crystallization degree of the interior of the substrate 1 with respect to the adhesive surface 1a of the substrate 1 with the polymer layer 2. The low crystallization step is implemented by a heating stage of heating the substrate 1 to higher than or equal to a crystallization temperature, and a cooling stage of cooling the adhesive surface 1a after the heating stage. The low crystallization process of the substrate 1 in the organic device shown in Fig. 1 is implemented by the heating stage of heating both surfaces of the adhesive surface 1a of the substrate 1 with the polymer layer 2 and the back surface thereof, to higher than or equal to a crystallization temperature, and a cooling stage of rapidly cooling both surfaces after the heating stage.

Fig. 2 is a conceptual view for describing the low crystallization process. As shown in the figure, an amorphous state in which the crystallization degree is reduced is obtained when the adhesive surfaces 1a of the substrate 1 is heated to higher than or equal to the crystallization temperature. When rapidly cooled thereafter, the polymer molecules configuring the adhesive surface 1a of the substrate 1 remain in a state of low crystallization degree without being relatively regularly lined. That is, the crystallization degree of the adhesive surface 1a of the substrate 1 is relatively low after the heating, and such low state is maintained even after rapid cooling. If the adhesive surface 1a of the substrate 1 is heated to higher than or equal to the crystallization temperature and then gradually cooled, the polymer molecules configuring the adhesive surface 1a of the substrate 1 are again regularly lined and a state of high crystallization degree is obtained.

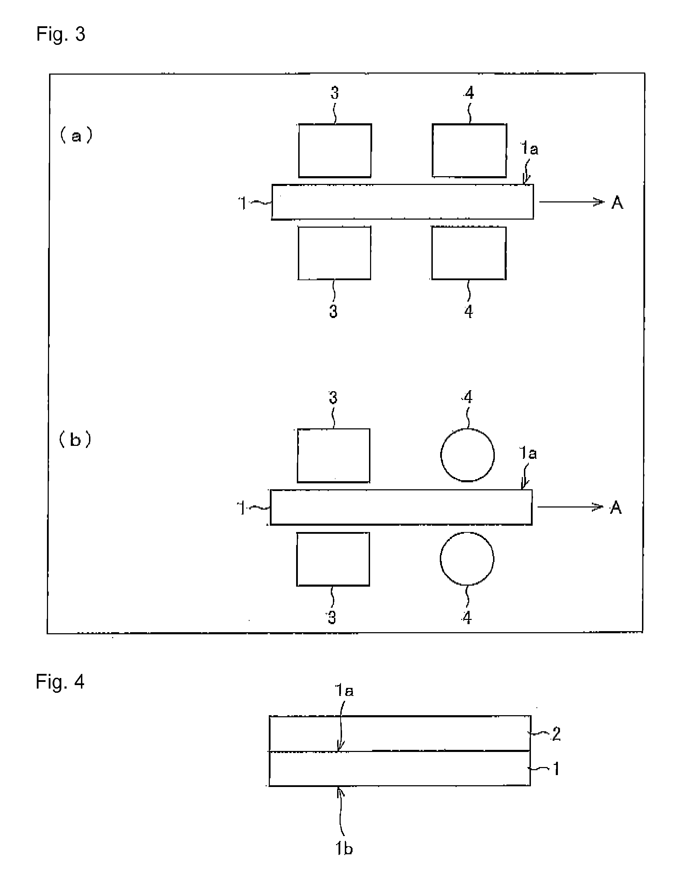

The method of the low crystallization process of the substrate 1 in the organic device shown in Fig. 1 will be described based on Figs. 3(a) and 3(b). Figs. 3(a) and 3(b) are explanatory views for describing the method of low crystallization process of the substrate 1 in the organic device of Fig. 1.

As shown in Fig. 3(a), the substrate 1 is conveyed in a substrate conveying direction A by a substrate conveying means. At an upstream of the substrate conveying direction A, the adhesive surface 1a and the back surface of the substrate 1 are heated by a heater 3. The heating temperature by the heater 3 is higher than or equal to the crystallization temperature. The "crystallization degree" is the temperature at which the polymer molecules configuring the substrate 1 start to be regularly lined and crystallized.

In the low crystallization process of the substrate 1, the adhesive surface 1a and the back surface of the substrate 1 are cooled by a cooler 4 at the downstream of the heater 3 in the substrate conveying direction A. The adhesive surface 1a and the back surface of the substrate 1 thus have a crystallization degree smaller than the crystallization degree obtained after heating.

The heater 3 and the cooler 4 are installed at the upstream and the downstream in the substrate conveying direction A, respectively, and the substrate 1 is conveyed to thereby complete the substrate 1 subjected to the low crystallization process. In the low crystallization process, the crystallization degree of the adhesive surface 1a of the substrate 1 can be reduced through a simple method of only heating and cooling by the heater 3 and the cooler 4.

The shapes of the heater 3 and the cooler 4 are not limited as long as the adhesive surface 1a of the substrate 1 can be heated and cooled. For instance, the cooler 4 may be a roll-shape, as shown in Fig. 3(b). In this case, in particular, the cooler 4 is preferably made of a material having a relatively high thermal conductivity. The heat of the substrate 1 generated by heating then can be rapidly conducted to the cooler 4, and the cooling efficiency by the cooler 4 can be enhanced.

The substrate 1 shown in Fig. 1 and Figs. 3(a) and 3(b) have a configuration in which the low crystallization process is performed on both the adhesive surface 1a and the back surface thereof. However, the substrate in the present organic device is not limited to such configuration, and merely needs to have a configuration in which the low crystallization process is performed on at least the adhesive surface.

Fig. 4 is a cross-sectional view showing another configuration of the present organic device. The organic device shown in Fig. 4 has a configuration in which the crystallization degree of the adhesive surface 1a of the substrate 1 with respect to the polymer layer 2 is smaller than the crystallization degree of the back surface 1b on the side opposite to the adhesive surface 1a of the substrate 1.

The tensile strength of the substrate 1 generally becomes weaker as the crystallization degree of the substrate 1 becomes lower. In the above configuration, the crystallization degree is different for the adhesive surface 1a and the back surface 1b, and the crystallization degree of the back surface 1b is maintained large. Thus, the organic device shown in Fig. 4 has a structure that is strong to pulling and the like. Therefore, the organic device shown in Fig. 4 has an effect in that a pulling resistance property is enhanced.

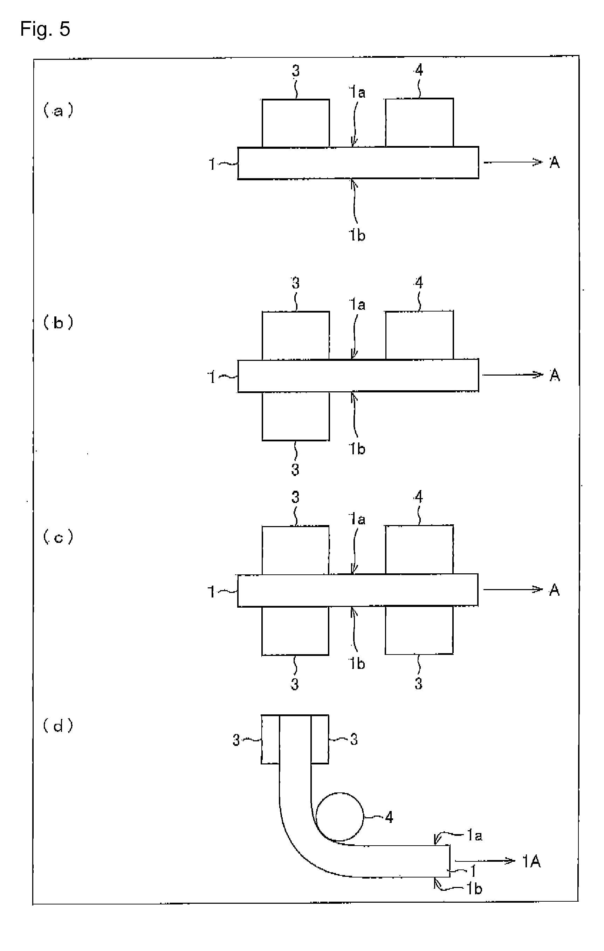

Figs. 5(a) to 5(d) are explanatory views for describing the method of low crystallization process of the substrate 1 in the organic device of Fig. 4. The low crystallization process of the substrate 1 in the organic device of Fig. 4 is realized by heating at least the adhesive surface 1a of the adhesive surface 1a of the substrate 1 with the polymer layer 2 and the back surface 1b thereof to higher than or equal to the crystallization temperature (heating step), and then performing the cooling step of rapidly cooling only the adhesive surface 1a.

First, as shown in Fig. 5(a), only the adhesive surface 1a of the substrate 1 is heated to higher than or equal to the crystallization temperature by the heater 3 at the upstream of the substrate conveying direction A of the substrate 1. The crystallization degree of the adhesive surface 1a of the substrate 1 is thus relatively low after the heating by the heater 3.

As shown in Fig. 5(a), the cooler 4 is arranged at the downstream in the substrate conveying direction than the heater 3, and is faced to the adhesive surface 1a of the substrate 1. Thus, in the low crystallization process of the substrate 1, only the adhesive surface 1a of the substrate 1 is cooled by the cooler 4. The back surface 1b of the substrate 1 is in a state in which a relatively high crystallization degree is maintained without being cooled. The adhesive surface 1a of the substrate 1 has smaller crystallization degree than the crystallization degree of the back surface 1b.

Therefore, the substrate 1 in which the crystallization degree of the adhesive surface 1a is smaller than the crystallization degree of the back surface 1b is completed by installing the heater 3 and heating at least the adhesive surface 1a of the substrate 1, and installing the cooler 4 and cooling only the adhesive surface 1a of the substrate 1 at the downstream of the substrate conveying direction A. In the low crystallization process, the crystallization degree of the adhesive surface 1a can be made smaller than the crystallization degree of the back surface 1b through a simple method of only heating and cooling with the heater 3 and the cooler 4.

When heating with the heater 3, at least the back surface 1b of the substrate 1 needs to be heated, and both the adhesive surface 1a and the back surface 1b of the substrate 1 may be heated by the heater 3, as shown in Fig. 5(b). Furthermore, the adhesive surface 1a of the of the substrate 1 may be cooled by the cooler 4, and the back surface 1b of the substrate 1 may be heated by the heater 4 at the downstream of the substrate conveying direction A, as shown in Fig. 5(c).

The shapes of the heater 3 and the cooler 4 are not limited as long as the adhesive surface 1a of the substrate 1 can be heated and cooled. For instance, the cooler 4 may be a roll-shape, as shown in Fig. 5(d). In this case, in particular, the cooler 4 is preferably made of a material having a relatively high thermal conductivity.

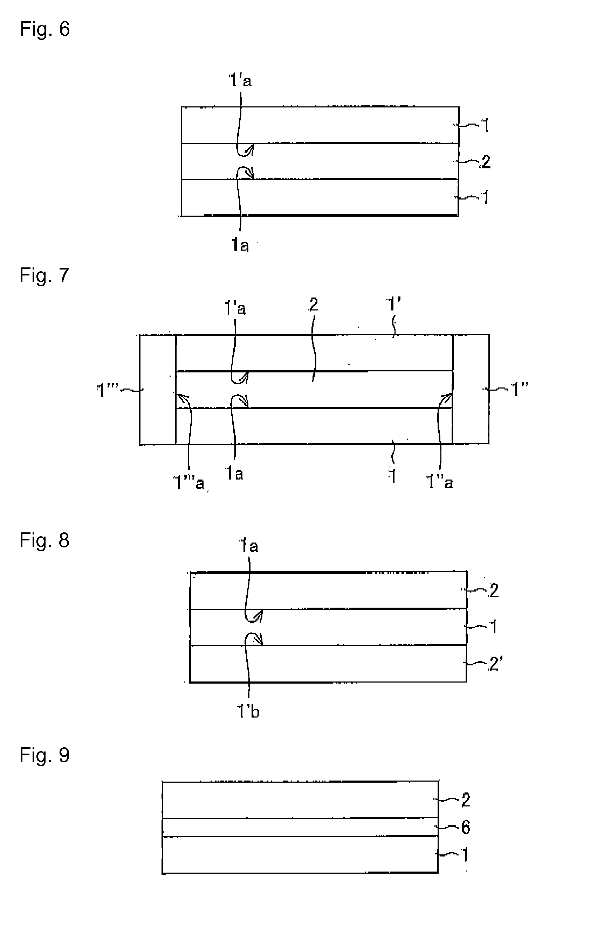

The present organic device is not particularly limited as long as it has a configuration in which the polymer layer is adhered to the substrate made of polymer. The configurations shown in Fig. 6 and Fig. 7 may be adopted as a variant of the present organic device. The organic device shown in Fig. 6 and Fig. 7 has a configuration in which the polymer layer is surrounded by a plurality of substrates. The polymer layer is generally weak with respect to external environment. Since the polymer layer is protected by the substrate in the organic device shown in Fig. 6 and Fig. 7, an environment resistance property is enhanced and the reliability as the device is enhanced.

Specifically, the organic device shown in Fig. 6 is configured to include two substrates 1 and 1'. The polymer layer 2 is sandwiched by the substrates 1 and 1'. The adhesive surfaces 1a and 1'a of the substrates 1 and 1' with the polymer layer 2 are subjected to the low crystallization process. The crystallization degree of the adhesive surfaces 1a and 1'a of the substrate 1 is thus smaller than the crystallization degree of the interior of the substrate 1.

The organic device shown in Fig. 7 is configured to include four substrates 1 to 1"'. The substrates 1 to 1"' are arranged to surround the polymer layer 2. The adhesive surfaces 1a to 1"'a of the substrates 1 to 1'" with the polymer layer 2 are subjected to the low crystallization process.

Fig. 8 is a cross-sectional view showing another variant of the present organic device. The organic device shown in Fig. 8 has a configuration in which the substrate is sandwiched by two polymer layers. Specifically, the organic device shown in Fig. 8 is configured to include the polymer layers 2 and 2'. The substrate 1 is sandwiched by the polymer layers 2 and 2'. In other words, the back surface 1'b on the opposite side of the adhesive surface 1a with the polymer layer 2 in the substrate 1 is the adhesive surfaces with the polymer layer 2'. The adhesive surface 1a and the back surface 1'b are subjected to the low crystallization process. Thus, the crystallization degree of the adhesive surface 1a and the back surface 1'b of the substrate 1 becomes smaller than the crystallization degree of the interior of the substrate 1. As shown in Fig. 8,higher density and miniaturization of the organic device can be realized by using the back surface 1'b of the substrate 1 for the adhesive surface with the polymer layer 2'.

Fig. 9 is a cross-sectional view showing another further variant of the present organic device. The organic device shown in Fig. 9 has a configuration in which an intermediate layer 6 is arranged between the substrate 1 and the polymer layer 2. The adhesiveness of the substrate 1 and the polymer layer 2 can be enhanced by arranging the intermediate layer 6.

The material of the intermediate layer 6 is not particularly limited as long as it is a material that satisfies the adhesive force between the intermediate layer 6 and the substrate 1 and the adhesive force between the intermediate layer 6 and the polymer layer 2 > the adhesive force between the substrate 1 and the polymer layer 2 (equation 1), and may be a heat curable resin or UV curable resin.

From equation 1, the material of the intermediate layer 6 can be appropriately set according to the characteristics of the materials of the substrate 1 and the polymer layer 2. For instance, if the material of the substrate 1 is PI (polyimide) and the material of the polymer layer 2 is acryl resin, the material of the intermediate layer 6 is preferably silane modified epoxy resin. If the material of the substrate 1 is PET (polyethylene terephtalate) and the material of the polymer layer 2 is acryl resin, the material of the intermediate layer 6 is preferably polyester resin, acryl resin, or urethane resin. If the material of the resin 1 is PP (polypropylene) and the material of the polymer layer 2 is acryl resin, the material of the intermediate layer 6 is preferably polyethylene imine resin, polybutadiene resin, or urethane resin.

### (Regarding organic device to which invention of present application is applicable)

An organic device in which the polymer layer is an optical function layer having an optical function is preferable as an organic device to which the invention of the present application is applicable. The optical function layer includes a light guide, a diffraction element, an electronic paper, and the like.

Flexibility of the device is particularly demanded on the organic device in which such optical function layer is adhered to the substrate. Thus, the adhesiveness of the optical function layer and the substrate is directly related to the characteristics and the reliability of the device. Therefore, through application of the present invention to the organic device including the optical function layer, the adhesiveness of the substrate and the optical function layer is enhanced, and a flexible optical function device (organic device) excelling in characteristics and reliability can be realized.

The organic device to which the invention of the present application can be applied will be specifically described below.

### (1.1) Organic device serving as light guide

The present organic device may be an organic device in which a light guide serving as the optical function layer is adhered to the substrate made of polymer. First, the light guide and the optical module including the light guide will be described below.

### (Configuration of organic device serving as light guide)

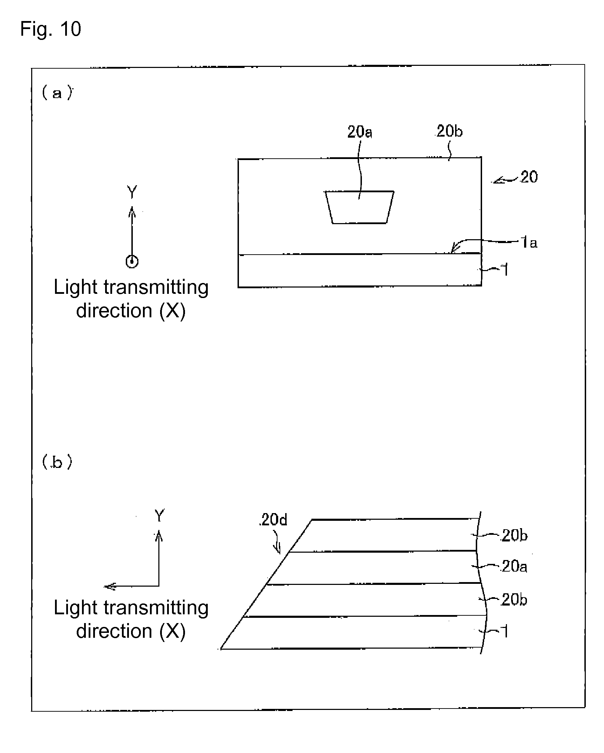

Figs. 10(a) and 10(b) show a schematic configuration of the present organic device including a light guide 20 serving as a polymer layer, where Fig. 10(a) is a cross-sectional view taken at a plane perpendicular to the light transmitting direction, and Fig. 10(b) is a cross-sectional view taken at a plane parallel to the light transmitting direction. The light guide 20 has a configuration including a column-shaped core 20a having the light transmission direction as the axis, and a clad 20b arranged to surround the periphery of the core 20a. The core 20a and the clad 20b are made of material having translucency, and the index of refraction of the core 20a is higher than the index of refraction of the clad 20b. The light signal that entered the core 20a is transmitted in the light transmission direction by repeating total reflection inside the core 20a. In Figs. 10(a) and 10(b), the longitudinal direction (optical axis direction) of the light guide 20 is the X-axis direction and the normal direction of the adhesive surface 1a of the substrate 1 is the Y-axis direction at the vicinity of the end of the light guide 20.

Glass, plastic, and the like can be used for the material for forming the core 20a and the clad 20b, but a flexible material having an elasticity of lower than or equal to 1000 MPa is preferable to configure the light guide 20 having sufficient flexibility. The material for configuring the light guide 20 includes resin material such as acryl series, epoxy series, urethane series, and silicone series. The clad 20b may be configured by gas such as air. Furthermore, similar effects are obtained by using the clad 20b under a liquid atmosphere having a smaller index of refraction than the core 20a.

Furthermore, as shown in Fig. 10(b), the end face of the light guide 20 is not perpendicular to the light transmitting direction, and is diagonally cut to form a light path conversion mirror surface 20d. Specifically, the end face of the light guide 20 is inclined to be perpendicular to the XY plane and to form an angle θ (θ < 90°) with respect to the X-axis.

Thus, the signal light transmitted through the core 20a is reflected at the light path conversion mirror surface 20d on the light exit side of the light guide 20, and exit towards the optical element from the light path conversion mirror surface 20d with the advancing direction changed.

The inclined angle θ of the optical path changing mirror surface 20d is normally set to 45° so that the alignment of the optical path changing mirror surface 20d and the optical element is facilitated. The optical path changing mirror may be obtained by externally attaching a mirror to the end of the light guide 20.

The present organic device has a configuration in which the light guide 20 is adhered to the substrate 1 made of polymer. The low crystallization process is performed on the adhesive surface 1a with the light guide 20 of the substrate 1. Thus, adhesiveness between the substrate 1 and the light guide 20 can be sufficiently ensured even under adverse conditions of ultra-bent state and ultra-twisted state.

The film light guide is applied under a specific environment of ultra-bent R = 1 mm · twist 270°. According to such configuration, the separation between the substrate 1 and the light guide 20 can be prevented even if stress concentrates under a usage environment specific to the film light guide. Furthermore, the separation between the substrate 1 and the light guide 20 can be prevented even with respect to the reliability test specific to the light guide of R = 1 mm bendability resistance for one hundred thousand times or 85°C 85RH% and leaving for 200 hours, and hence a light guide having high reliability can be realized.

For instance, if the present organic device serving as the light guide is applied to the portable telephone, the light guide can be installed in an area where ultra-bend and ultra-twist occurs such as the hinge portion or a microscopic narrow portion of the portable telephone. An effect in that the light transmission at the area where ultra-bent and ultra-twist occurs becomes satisfactory is obtained.

### (Manufacturing method of organic device serving as light guide)

The manufacturing method of the light guide includes the following two manufacturing methods. The present invention is applicable to all four manufacturing methods. The manufacturing method of the present organic device serving as the light guide will be specifically described below.

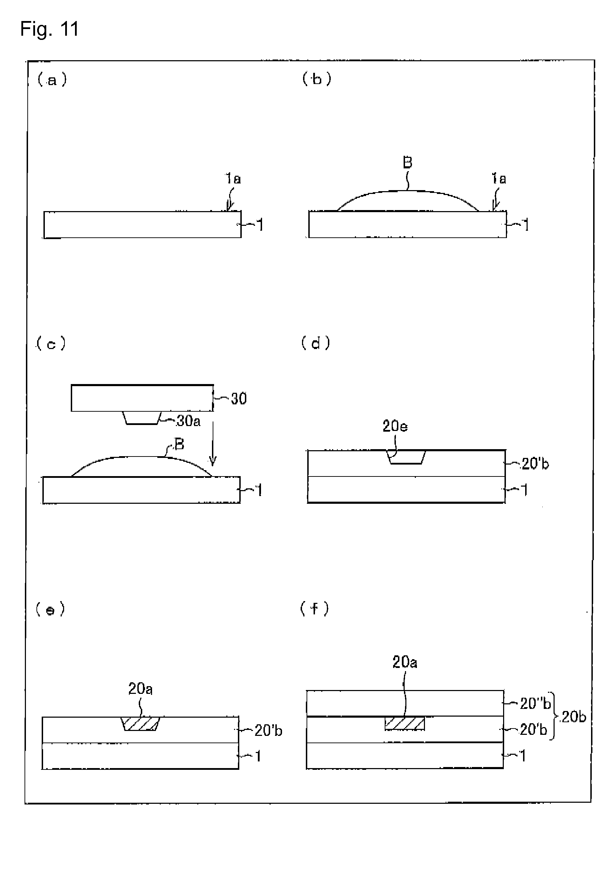

Figs. 11(a) to 11(f) are cross-sectional views showing a fabricating method (duplicating method) of the light guide using a die. First, as shown in Fig. 11(a), the substrate 1 in which the low crystallization process is performed on the adhesive surface 1a with the light guide 20 is prepared.

As shown in Fig. 11(b), a resin B made up of ultraviolet curable resin or heat curable resin is dropped onto the adhesive surfaces 1a of the substrate 1. The resin B is a material that configures the clad 20b of the light guide 20.

As shown in Fig. 11(c), the resin B is held down with a die 30 so that the resin B spreads between the die 30 and the substrate 1. As shown in Fig. 11(d), the resin B is curved by ultraviolet ray irradiation or heating to form a lower clad layer 20'b. Thereafter, as shown in Fig. 11(d), the resin B is cured by ultraviolet ray irradiation or heating and the die 30 is separated from the lower clad layer 20'b.

The die 30 is formed with a projecting portion 30a. The resin B is held down with the die 30 so that the projecting portion 30a contacts the resin B. Thus, after the resin B is cured, a core groove 20e formed by the projecting portion 30a is formed in the formed lower clad layer 20'b. The material that configures the core 20a is filled and cured in the core groove 20e, thereby forming the core 20a (see Fig. 11(e)).

As shown in Fig. 11(f), the resin B is dropped and spread with a stamper on the lower clad layer 20'b and the core 20a. The resin B is then cured to form an upper clad layer 20"b.

Through the procedures shown in Figs. 11(a) to 11(f), the light guide 20 including the core 20a, and the clad 20b (lower clad layer 20'b and upper clad layer 20"b) surrounding the core 20a is completed. The fabricating method (duplicating method) of the light guide using the die shown in Figs. 11(a) to 11(f) enables a great number of duplicated articles to be fabricated from one die, and the fabricating procedure is also simple. Thus, the productivity of the light guide can be enhanced and lower cost can be realized. Furthermore, even with a core of a shape where highly accurate microscopic patterns and formations are difficult, the core can be stably formed by manufacturing the die once.

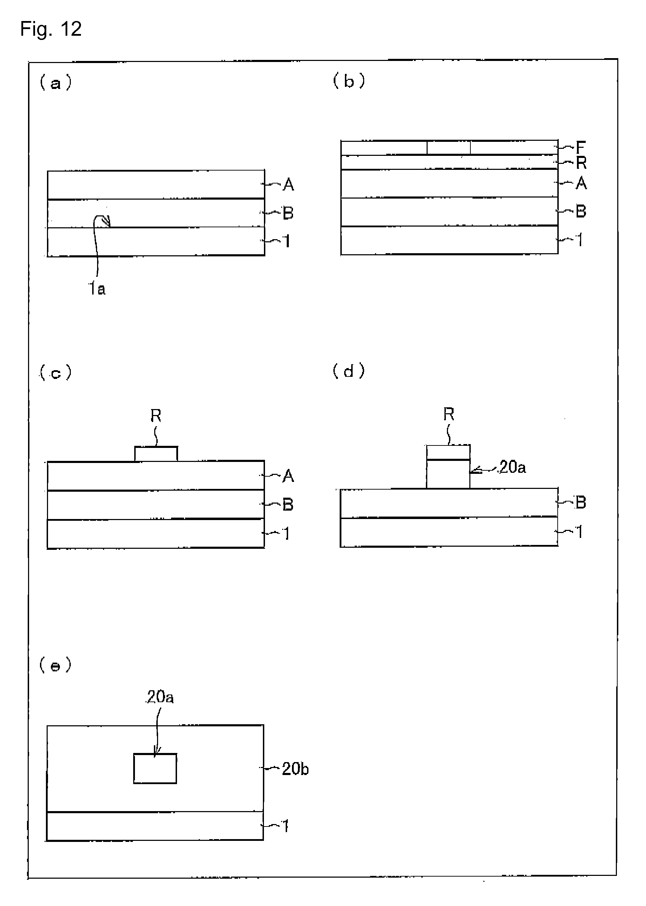

Figs. 12(a) to 12(e) are cross-sectional views showing a fabricating method of the light guide using the dry etching method. First, as shown in Fig. 12(a), the substrate in which the low crystallization process is performed on the adhesive surface 1a with the light guide 20 is prepared. A layer configured by a resin B, which is a material of the clad 20b, and a layer configured by a resin A, which is a material of the core 20A, are formed in such order on the adhesive surfaces 1a of the substrate 1.

As shown in Fig. 12(b), a resist R is formed on the layer configured by the resin A, and the resist R is covered and exposed by a photomask F. After developing the resist R (after Fig. 12(c), reactive ion etching (RIE) is performed until reaching the layer configured by the resin B to form the core 20a (Fig. 12(d)). Thereafter, the resist R is removed and the layer configured by the resin B is formed, as shown in Fig. 12(e), to thereby complete the light guide.

The present invention is applicable to the manufacturing methods of the light guide shown in Figs. 11(a) to 11(f) and Figs. 12(a) to 12(e). However, the application of the present invention is not limited to such two manufacturing methods, and is applicable as long as it is a manufacturing method including a step of forming a polymer layer serving as the light guide on the substrate surface. The present invention is also applicable to the manufacturing method of the light guide using direct exposure method or photo-bleaching method.

### (Configuration of optical module including light guide)

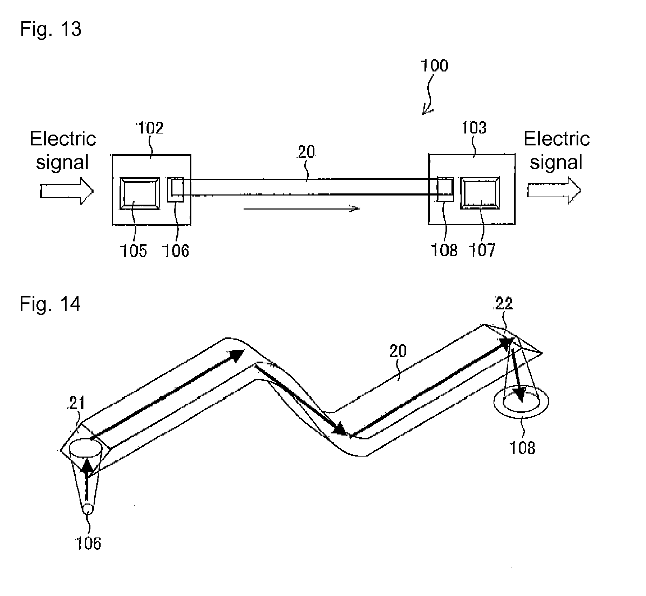

Fig. 13 shows a schematic configuration of an optical module 100 including the light guide 20. As shown in the figure, the optical module 100 includes a light transmission processing unit 102, a light reception processing unit 103, and the light guide 20.

The light transmission processing unit 102 has a configuration including a light emitting drive portion 105 and a light emitting portion (optical element) 106. The light emitting drive portion 105 drives the light emission of the light emitting portion 6 based on an electrical signal inputted from the outside. The light emitting drive portion 5 is configured by a light emission drive IC (Integrated Circuit). Although not shown in the figure, the light emitting drive portion 105 includes an electrical connecting part with respect to an electrical wiring for transmitting the electrical signal from the outside.

The light emitting portion 106 emits light based on a drive control by the light emitting drive portion 105. The light emitting portion 106 is configured by a light emitting element such as VCSEL (Vertical Cavity-Surface Emitting Laser). A light incident side end of the light guide 20 is irradiated with the light emitted from the light emitting portion 6 as a light signal

The light reception processing unit 103 has a configuration including an amplifier 107 and a light receiving portion (optical element) 108. The light receiving portion 108 receives the light serving as a light signal exit from a light exit side end of the light guide 20, and outputs an electrical signal through photoelectric conversion. The light receiving portion 108 is configured by a light receiving element such as PD (Photo-Diode).

The amplifier 107 amplifies the electric signal outputted from the light receiving portion 108 and outputs the same to the outside. The amplifier 107 is configured by amplification IC, for example. Although not shown, the amplifier 7 includes an electrical connecting part with respect to the electrical wiring for transmitting the electrical signal to the outside.

The light guide 20 is a medium for transmitting the light exit from the light emitting portion 106 to the light receiving portion 108.

FIG. 14 schematically shows the state of light transmission in the light guide 20. As shown in the figure, the light guide 20 is configured by a column-shaped member having flexibility. A light incident surface 21 is arranged at the light incident side end of the light guide 20, and a light exit surface 22 is arranged at the light exit side end.

The light exit from the light emitting portion 106 enters from a direction perpendicular to the light transmission direction of the light guide 20 with respect to the light incident side end of the light guide 20. The incident light advances through the light guide 20 by being reflected at the light incident surface 21. The light that advances through the light guide 20 and reaches the light exit side end is reflected at the light exit surface 22 and exits in a direction perpendicular to the light transmission direction of the light guide 20. The light receiving portion 108 is irradiated with the exit light, and photoelectric conversion is performed in the light receiving portion 108.

According to such configuration, the light emitting portion 106 serving as a light source can be arranged in a transverse direction with respect to the light transmitting direction with respect to the light guide 20. Thus, if the light guide 20 needs to be arranged parallel to the mounting substrate surface for mounting the light emitting portion 106 and the like, the light emitting portion 106 is to be installed between the light guide 20 and the mounting substrate surface so as to emit light in the normal direction of the mounting substrate surface. With such configuration, the mounting becomes easier than the configuration of installing the light emitting portion 106 so as to emit light parallel to the mounting substrate surface, and the configuration is also more compact. This is because the general configuration of the light emitting portion 106 has a size in the direction perpendicular to the direction of emitting light greater than the size in the direction of emitting light. Furthermore, application can be made to the configuration of using a plane mounting light emitting element in which the electrode and the light emitting portion are in the same plane.

The optical module 100 of the present embodiment has a configuration in which the signal light propagated through the light guide 20 is reflected by the light exit surface 21 and guided to the light receiving portion 108 (i.e., configuration of using the light exit surface 22 as the reflection surface for changing the optical path), but the configuration of the optical module 100 is not limited to such a configuration, and may be any configuration as long as the signal light exit from the light exit surface 22 can be received by the light receiving portion 108. For instance, the light guide 20 may have a configuration in which the light exit surface 22 does not function as the reflection surface, and the signal light may exit in the light transmission direction from the light exit surface 22. In this case, the light receiving portion 108 is arranged such that the light receiving surface is in a direction perpendicular to the substrate surface (i.e., direction perpendicular to the light transmission direction) so as to receive the signal light exit in the light transmission direction from the light exit surface 22.

### (Application Example)

The optical module 100 of the present embodiment can be applied to the following application examples.

First, as a first application example, use can be made at a hinge portion in a foldable electronic device such as a foldable portable telephone, a foldable PHS (Personal Handyphone System), a foldable PDA (Personal Digital Assistant), and a foldable notebook computer.

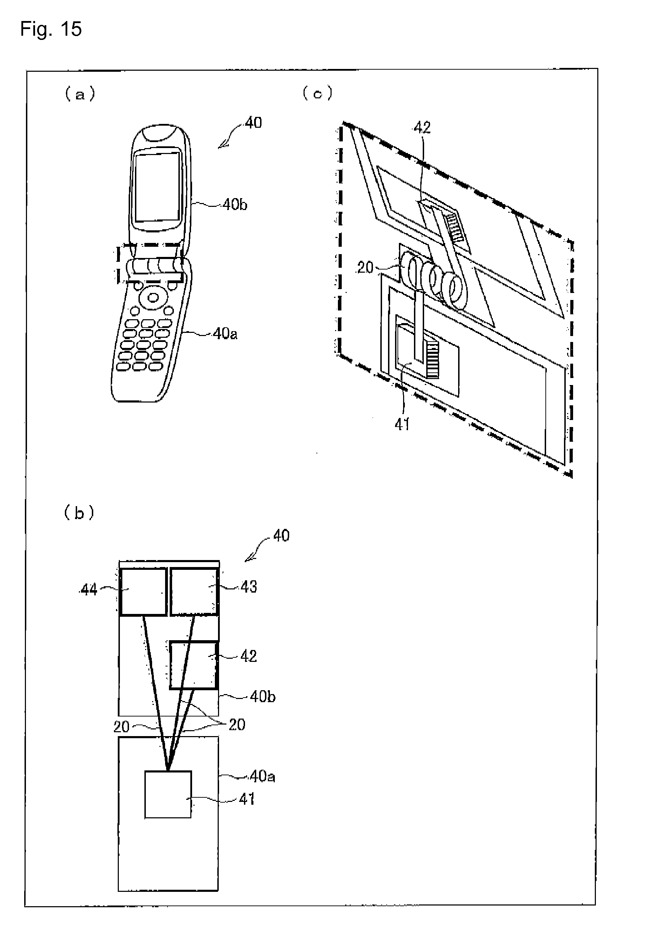

FIGS. 15(a) to (c) show an example in which the light guide 20 is applied to a foldable portable telephone 40. In other words, FIG. 15(a) is a perspective view showing an outer appearance of the foldable portable telephone 40 incorporating the light guide 20.

FIG. 15(b) is a block diagram of a portion where the light guide 20 is applied in the foldable portable telephone 40 shown in FIG. 15(a). As shown in the figure, a control unit 41 arranged on a body 40a side in the foldable portable telephone 40, an external memory 42, a camera (digital camera) 43, and a display unit (liquid crystal display) 44 arranged on a lid (drive portion) 40b side rotatably arranged at one end of the body with the hinge portion as a shaft are connected by the light guide 20.

FIG. 15(c) is a perspective plan view of the hinge portion (portion surrounded with a broken line) in FIG. 15(a). As shown in the figure, the light guide 20 is wrapped around a supporting rod at the hinge portion and bent to thereby connect the control unit arranged on the body side, and the external memory 42, the camera 43, and the display unit 44 arranged on the lid side.

High speed and large capacity communication can be realized in a limited space by applying the light guide 20 to the foldable electronic device. Therefore, it is particularly suitable in devices where high speed and large capacity data communication is necessary and miniaturization is demanded such as the foldable liquid crystal display.

As a second application example, the light guide 20 is applied to a device having a drive portion such as a printer head in a printing device (electronic device) and a reading unit in a hard disk recording and reproducing device.

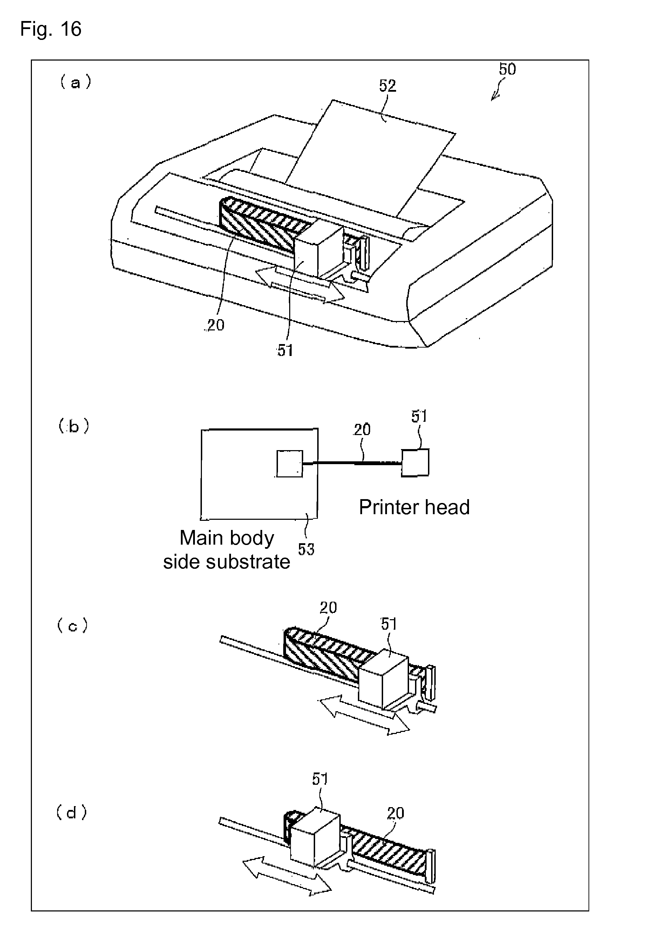

FIGS. 16(a) to (c) show an example in which the light guide 20 is applied to a printing device 50. FIG. 16(a) is a perspective view showing an outer appearance of the printing device 50. As shown in FIG. 9(a), the printing device 50 includes a printer head 51 for performing printing on a paper 52 while moving in a width direction of a paper 52, where one end of the light guide 20 is connected to the printer head 51.

FIG. 16(b) is a block diagram of a portion where the light guide 20 is applied in the printing device 50. As shown in the figure, one end of the light guide 20 is connected to the printer head 51, and the other end is connected to a body side substrate in the printing device 50. The body side substrate includes control means etc. for controlling the operation of each unit of the printing device 50, and the like.

FIG. 16(c) and FIG. 16(d) are perspective views showing a curved state of the light guide 20 when the printer head 51 is moved (driven) in the printing device 50. As shown in the figures, when the light guide 20 is applied to the drive portion such as the printer head 51, the curved state of the light guide 20 changes by the drive of the printer head 51 and each position of the light guide 20 repeatedly curves.

Therefore, the optical module 100 according to the present embodiment is suited for such a drive portion. High speed and large capacity communication using the drive portion can be realized by applying the optical module 100 to such drive portions.

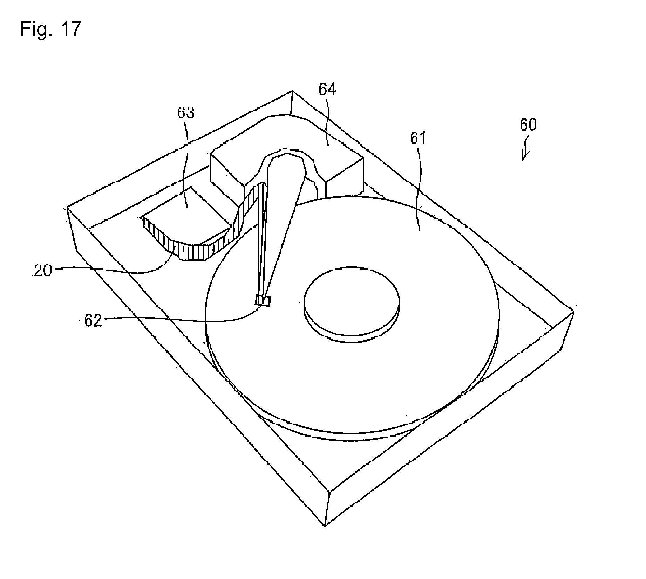

FIG. 17 shows an example in which the light guide 20 is applied to a hard disk recording and reproducing device 60.

As shown in the figure, the hard disk recording and reproducing device 60 includes a disk (hard disk) 61, a head (read/write head) 62, a substrate introducing portion 63, a drive portion (drive motor) 64, and the light guide 20.

The drive portion 64 drives the head 62 along a radial direction of the disk 61. The head 62 reads the information recorded on the disk 61 and writes information on the disk 61. The head 62 is connected to the substrate introducing portion 63 by way of the light guide 20, and propagates the information read from the disk 61 to the substrate introducing portion 63 as a light signal and receives the light signal of the information to write to the disk 61 propagated from the substrate introducing portion 63.

Therefore, high speed and large capacity communication can be realized by applying the light guide 20 to the drive portion such as the head 62 in the hard disk recording and reproducing device 60.

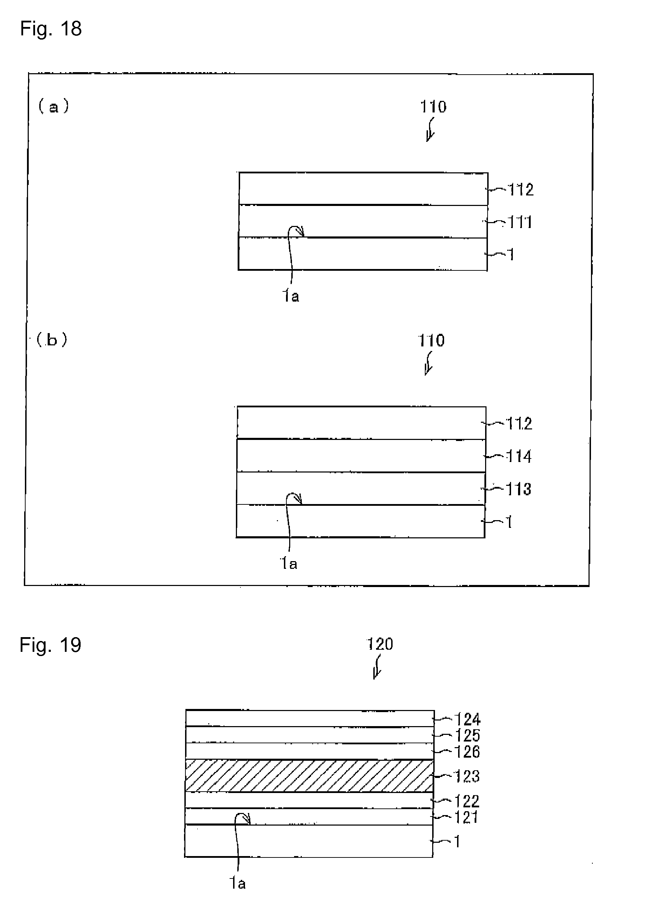

(1.2) Organic device serving as organic light emitting element or liquid crystal panel cell Figs. 18(a) and 18(b) are cross-sectional views showing a schematic configuration of the present organic device applied as an organic light emitting element. As shown in Fig. 18(a), an organic light emitting element 110 includes a stacked structure in which a polymer layer 111 configured by a conductive polymer and a light emitting layer 112 are stacked in order on a substrate 1. As shown in Fig. 18(b), the organic light emitting element 110 has a stacked structure in which a buffer layer 113, an electrode layer 114, and a light emitting layer 112 are stacked in order on the substrate 1. In the organic light emitting element applied with the present invention, the low crystallization process is performed on the adhesive surface 1a of the substrate 1 in the stacked structure shown in Figs. 18(a) and 18(b).

Fig. 19 is a cross-sectional view showing a schematic configuration of the present organic device applied as a liquid crystal panel cell. As shown in the figure, the liquid crystal panel cell 120 has a configuration in which a liquid crystal layer 123 is sandwiched by the substrate 1 and the color filter 124. A polymer layer 121 configured by a conductive polymer and an orientation film 122 are formed in order on the substrate 1 towards the liquid crystal layer 123. A polymer layer 125 configured by a conductive polymer and an orientation film 126 are formed in order on the color filter 124 towards the liquid crystal layer 123. In the liquid crystal panel cell, the low crystallization process is performed on the adhesive surface 1a with the polymer layer 121 in the substrate 1.

Since the low crystallization process is performed on the adhesive surface 1a of the substrate 1, the adhesiveness of the polymer layer and the substrate is enhanced. According to such configuration, the stripping of the substrate and the polymer layer by the concentration of stress at the time of bend and twist can be prevented and the anti-bendability is also enhanced. The stripping of the substrate and the polymer layer due to heat generation in the device operation can also be prevented.

In particular, when the present invention is applied to the organic light emitting element or the liquid crystal panel cell, the organic light emitting element or the liquid crystal panel cell can be installed at areas where bending and twisting are required such as a curved portion in a flexible display.

### (1.3) Organic device serving as organic solar battery

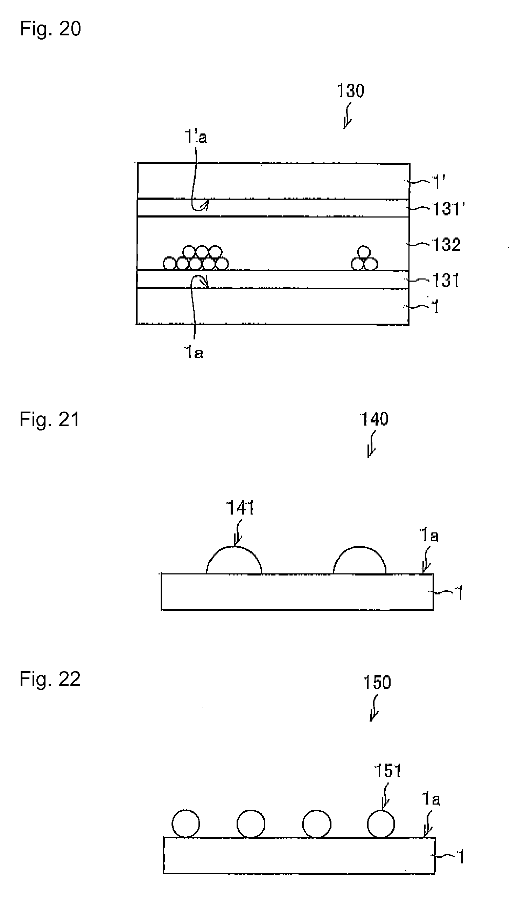

Fig. 20 is a cross-sectional view showing a schematic configuration of the present organic device applied as an organic solar battery. As shown in the figure, an organic solar battery 130 includes two opposing substrates 1, 1', and has a configuration in which an electrolyte layer 132 is sandwiched by the two substrates 1, 1'. The electrolyte solution configuring the electrolyte layer 132 contains titanium oxide (TiO₂) and pigment.

Polymer layers 131, 131' configured by a conductive polymer are formed on the surface on the electrolyte layer 132 side in the substrates 1, 1'. The low crystallization process is performed on the adhesive surfaces 1a, 1a' with the polymer layers 131, 131' in the substrates 1, 1'.

In this configuration as well, the adhesiveness of the substrates 1, 1' and the polymer layers 131, 131' is enhanced. In particular, when the present invention is applied to the organic solar battery, the organic solar battery cell can be installed at areas where bending and twisting are required such as a curved portion of a curtain, blinder, and the like.

### (1.4) Organic device serving as micro-lens

Fig. 21 is a cross-sectional view showing a schematic configuration of the present organic device applied as a micro-lens serving as the polymer layer. As shown in the figure, the present organic device has a configuration in which a micro-lens 141 serving as a polymer layer is formed. The low crystallization process is performed on the adhesive surfaces 1a with the micro-lens 141 in the substrate 1.

The adhesiveness of the substrate 1 and the micro-lens 141 thus is enhanced. When applied as the micro-lens serving as the polymer layer, the micro-lens can be used at areas where bending and twisting are required.

The organic device shown in Fig. 21 is preferably manufactured in the following procedures. In other words, (i) prepare the substrate 1 performed with the low crystallization process, and (ii) apply and cure the polymer that becomes the material of the micro-lens 141 by inkjet on the adhesive surface 1a of the substrate 1.

Through the use of the inkjet method, the organic device can be more easily manufactured. The photomask does not need to be used to form the micro-lens 141. Thus, resin such as resist (necessary when using photomask) does not need to be used, and the micro-lens can be manufactured at low cost.

### (1.5) Organic device serving print wiring substrate

Fig. 22 is a cross-sectional view showing a schematic configuration of the present organic device applied as a print wiring substrate. As shown in the figure, a print wiring substrate 150 has a configuration in which a wiring layer 151 made of conductive polymer is printed on the substrate 1. The low crystallization process is performed on the adhesive surfaces 1a with the wiring layer 151 in the substrate 1.

The adhesiveness between the substrate 1 and the wiring layer 151 can be sufficiently ensured even under adverse conditions of ultra-bent state and ultra-twisted state. The stripping between the substrate 1 and the wiring layer 151 due to concentration of stress at the time of bend and twist can be prevented.

Thus, when the present organic device serving as the print wiring substrate is applied to a portable telephone, the print wiring substrate can be installed at areas where ultra-bend and ultra-twist occur such as the hinge portion or the microscopic narrow portion of the portable telephone. The organic electric transmission at areas where ultra-bend and ultra-twist occur thus becomes satisfactory.

The present invention is not limited to the embodiments described above, and various modifications may be made within the scope of the Claims. In other words, the embodiments obtained by combining the technical means appropriately changed within the scope of the Claims are also encompassed in the technical scope of the invention.

In the organic device of the present invention, as described above, the crystallization degree of the adhesive surface with the polymer layer in the substrate is smaller than a crystallization degree of a back surface on a side opposite to the adhesive surface of the substrate.

The manufacturing method of the organic device according to the present invention includes a low crystallization step of performing the low crystallization process, which is for lowering the crystallization degree to lower than the crystallization degree of the interior of the substrate, on the adhesive surface with the polymer layer in the substrate.

In the above configuration, the crystallization degree of the adhesive surface with the polymer layer in the substrate is smaller than the crystallization degree of the interior in the substrate, and thus the adhesiveness of the substrate and the polymer layer becomes satisfactory. Thus, the adhesiveness of the substrate and the polymer layer can be ensured even when placed in an adverse condition of ultra-bent state or ultra-twisted state.

Further, in the organic device of the present invention, it is preferable that the crystallization degree of the adhesive surface with the polymer layer in the substrate is smaller than a crystallization degree of a back surface on a side opposite to the adhesive surface of the substrate.

According to the above configuration, the adhesiveness is further enhanced between the polymer layer and the substrate.

Further, in the organic device of the present invention, the polymer layer is an optical function layer having an optical function.

The organic device in which the optical function layer is adhered to the substrate is particularly demanded flexibility of the device. Thus, the adhesiveness between the optical function layer and the substrate is directly related to the characteristics and the reliability of the device. Therefore, the adhesiveness of the substrate and the optical function layer is enhanced by applying the invention of the present application to the organic device including the optical function layer, and a flexible optical function device (organic device) excelling in characteristics and reliability can be realized.

Particularly, in the organic device of the present invention, the polymer layer is a light guide.

The adhesiveness between the substrate and the light guide can be sufficiently ensured even under an adverse condition of ultra-bent state and ultra-twisted state. The stripping between the substrate and the light thus can be prevented even if the stress concentrates under a light guide specific usage environment.

Further, in the organic device of the present invention, an intermediate layer is arranged between the substrate and the polymer layer.

According to the above configuration, the adhesiveness between the substrate and the polymer layer further is enhanced since an intermediate layer is arranged between the substrate and the polymer layer.

Furthermore, in the organic device of the present invention, a primer processing is performed on an adhesive surface with the polymer layer or the intermediate layer of the substrate.

The adhesiveness between the substrate and the polymer layer is further enhanced by performing the primer processing on the contacting surface, and an organic device having higher reliability can be realized.

In order to solve the above problems, the present invention provides a manufacturing method of an organic device including a substrate made of polymer and having a polymer layer adhered on the substrate, the manufacturing method including the step of: performing low crystallization process on an adhesive surface with the polymer layer in the substrate to have a crystallization degree lower than a crystallization degree of an interior of the substrate.

The "low crystallization process" refers to the process performed with respect to the substrate surface having a relatively high crystallization degree so that the crystallization degree becomes lower than the original crystallization degree.

According to the above configuration, an organic device in which the adhesiveness between the substrate and the polymer layer can be enhanced can be manufactured since the organic device includes the low crystallization step of performing the low crystallization process, which is for lowering the crystallization degree to lower than the crystallization degree in the interior of the substrate, on the adhesive surface with the polymer layer in the substrate.

In the manufacturing method of the organic device of the present invention, the low crystallization step includes, heating stage of heating the substrate to higher than or equal to a crystallization temperature, and cooling stage of cooling the adhesive surface with the polymer layer in the substrate after the heating stage.

The "crystallization temperature" refers to the temperature at which the polymer molecules configuring the substrate start to regularly line and crystallize. According to the above configuration, the low crystallization step includes a heating step of heating the substrate to higher than or equal to the crystallization temperature and a cooling step of cooling the adhesive surface with the polymer layer in the substrate after the heating step, and thus the polymer molecules configuring the adhesive surface of the substrate remain in a state of low crystallization degree without being relatively regularly lined if the adhesive surface of the substrate is rapidly cooled after the substrate is heated to higher than or equal to the crystallization temperature. That is, the crystallization degree of the adhesive surface of the substrate is relatively low after heating, and is maintained in such low state even after rapid cooling. Thus, an organic device in which the adhesiveness of the polymer layer and the substrate is enhanced can be realized by adhering the polymer layer to the adhesive surface.

In the manufacturing method of the organic device of the present invention, the adhesive surface with the polymer layer in the substrate and a back surface thereof are both heated to higher than or equal to the crystallization temperature in the heating stage, and both surfaces are rapidly cooled in the cooling stage.

Thus, the low crystallization process can be performed on both surfaces of the adhesive surface and the back surface, of the substrate.

In the manufacturing method of the organic device of the present invention, at least a back surface of the adhesive surface with the polymer layer in the substrate and the back surface is heated to higher than or equal to the crystallization temperature in the heating stage, and only the adhesive surface is rapidly cooled in the cooling stage.

A substrate, in which the crystallization degree of the adhesive surface and the crystallization degree of the back surface differ, thus can be realized.

In order to solve the above problems, the present invention provides an organic device manufactured through the manufacturing method of the organic device.

An organic device in which the adhesiveness between the substrate and the polymer layer can be enhanced thus can be realized.

Specific embodiments and examples described in BEST MODE FOR CARRYING OUT THE INVENTION are provided merely to clarify the technical contents of the present invention and should not be interpreted in a narrow sense limiting only to such specific examples, and it should be recognized that embodiments obtained by appropriately combining the technical means disclosed in the different embodiments within the spirit of the invention and the scope of the accompanied Claims are also encompassed in the technical scope of the invention.

### INDUSTRIAL APPLICABILITY

The organic module according to the present invention can enhance the adhesiveness of the substrate and the polymer layer, and thus is applicable to a flexible optical wiring serving as an in-device wiring mounted in a small and thin commercial-off-the-shelf device.

## Claims

1. An organic device comprising a substrate made of polymer and including a polymer layer adhered on the substrate, wherein
a crystallization degree of an adhesive surface with the polymer layer in the substrate is smaller than a crystallization degree of an interior of the substrate.

2. The organic device according to claim 1, wherein the crystallization degree of the adhesive surface with the polymer layer in the substrate is smaller than a crystallization degree of a back surface on a side opposite to the adhesive surface of the substrate.

3. The organic device according to claim 1 or 2, wherein the polymer layer is an optical function layer having an optical function.

4. The organic device according to any one of claims 1 to 3, wherein the polymer layer is a light guide.

5. The organic device according to any one of claims 1 to 4, wherein an intermediate layer is arranged between the substrate and the polymer layer.

6. The organic device according to any one of claims 1 to 5, wherein a primer processing is performed on an adhesive surface with the polymer layer or the intermediate layer of the substrate.

7. A manufacturing method of an organic device including a substrate made of polymer and having a polymer layer adhered on the substrate, the manufacturing method comprising the step of:
performing low crystallization process on an adhesive surface with the polymer layer in the substrate to have a crystallization degree lower than a crystallization degree of an interior of the substrate.

8. The manufacturing method of the organic device according to claim 7, wherein the low crystallization step includes,
heating stage of heating the substrate to higher than or equal to a crystallization temperature, and
cooling stage of cooling the adhesive surface with the polymer layer in the substrate after the heating stage.

9. The manufacturing method of the organic device according to claim 8, wherein the adhesive surface with the polymer layer in the substrate and a back surface thereof are both heated to higher than or equal to the crystallization temperature in the heating stage, and both surfaces are rapidly cooled in the cooling stage.

10. The manufacturing method of the organic device according to claim 8, wherein at least a back surface of the adhesive surface with the polymer layer in the substrate and the back surface is heated to higher than or equal to the crystallization temperature in the heating stage, and only the adhesive surface is rapidly cooled in the cooling stage.

11. An organic device manufactured through the manufacturing method of the organic device according to any one of claims 7 to 10.
